# EUROPEAN PATENT APPLICATION

(11) **EP 2 922 122 A1**
(43) Date of publication of application: **23.09.2015**
(21) Application number: 13854288.1
(22) Date of filing: 15.11.2013
(51) Int. Cl.: H01M 4/66, H01G 11/68, H01M 4/13

(54) **COLLECTOR, ELECTRODE STRUCTURE BODY, AND ELECTRICAL STORAGE COMPONENT**

(30) Priority: 19.11.2012 JP 2012253757
(71) Applicant: UACJ Corporation, Chiyoda-ku, Tokyo (JP); UACJ Foil Corporation, Chuo-ku Tokyo 1030026 (JP); Furukawa Electric Co., Ltd., Chiyoda-ku Tokyo 100-8322 (JP)
(72) Inventor: KATO, Osamu, Tokyo 101-8970 (JP); SAITO, Sohei, Tokyo 101-8970 (JP); HONKAWA, Yukiou, Tokyo 101-8970 (JP); YAEGASHI, Tatsuhiro, Tokyo 101-8970 (JP); KATAOKA, Tsugio, Kusatsu-shi, Shiga 525-0042 (JP); INOUE, Mitsuya, Kusatsu-shi, Shiga 525-0042 (JP); YAMABE, Satoshi, Kusatsu-shi, Shiga 525-0042 (JP); MORISHIMA, Yasumasa, Tokyo 100-8322 (JP); ITO, Takayori, Tokyo 100-8322 (JP); HARA, Hidekazu, Tokyo 100-8322 (JP); IIDA, Takahiro, Tokyo 100-8322 (JP)
(74) Representative: Gulde & Partner
(86) International application number: PCT/JP2013/080932
(87) International publication number: WO 2014/077367

(57) **Abstract**

A current collector which can achieve both of the improvement in battery characteristics by reducing the initial (at ambient temperature) interface resistance and the improvement in safety by the PTC function, when the current collector is used for the electrode structure of electrical storage devices such as non-aqueous electrolyte batteries, electrical double layer capacitors, and lithium ion capacitors; electrode structures; electrical storage devices; and composition for current collectors; are provided. A current collector, including: a conductive substrate 103; and a resin layer 105 provided on at least one side of the conductive substrate 103; is provided. Here, the resin layer is formed by coating a paste including: polyolefin-based emulsion particles 125; and a conductive material 121; onto the conductive substrate 103. The coating weight of the paste is 0.1 to 20 g/m²; and the porosity of the resin layer 105 is 10% (v/v) or less.

## Description

### TECHNICAL FIELD

The present invention relates to current collectors, electrode structures, and to electrical storage devices (including non-aqueous electrolyte batteries, electrical double layer capacitors, and lithium ion capacitors).

### BACKGROUND

Regarding lithium ion batteries in the vehicle and the like, a high speed charge/discharge characteristics (high rate characteristics) is required at usual usage, and a so-called shut down function (PTC function) to terminate charge/discharge automatically and safely is required when an accident such as malfunction occurs. With respect to the former requirement, a technique to minimize the grain size of the active material and a technique to form a conductive layer onto the current collector has been known. On the other hand, with respect to the latter requirement, a system to improve the safety of the battery has been made. For example, a safety valve is used to prevent the inner pressure from increasing, and a structure to cut off the current when heat generation occurs is provided by incorporating a PTC (Positive Temperature Coefficient) element. Here, the PTC element is an element of which resistance value increases along with the increase in temperature. Regarding batteries, a technique to provide the PTC function to a separator has been known. The separator fuses at high temperature, and thus micropores are blocked. Accordingly, Li ions are blocked, thereby terminating the electrode reaction under over-heated circumstances. However, there are cases where the shut down by the separator is incomplete and thus the temperature increases to above the melting point of the separator, and cases where the temperature increase in the external surroundings result in the meltdown of the separator. Such cases would result in an internal short-circuit. Then, the shut down function of the separator can no longer be counted on, and the battery would be in the state of thermal runaway.

Therefore, a technique to provide charge/discharge characteristics during usual usage and to improve safety when an accident such as malfunction occurs is suggested. For example, Patent Literature 1 discloses of achieving resistance of 100Ωcm or higher at elevated temperature by using a conductive layer containing a polyolefin-based crystalline thermoplastic resin having a melting point of 100 to 120°C.

### CITATION LIST

### PATENT LITERATURE

Patent Literature 1: JP 2001-357854A

### SUMMARY OF THE INVENTION

### TECHNICAL PROBLEM

However, regarding the conventional techniques described in the afore-mentioned literatures, the so-called high rate characteristics when the high speed charge/discharge was performed was not sufficient, and the technique was not suitable for high speed charge/discharge at usual conditions. In addition, the initial (at ambient temperature) interface resistance was high, and thus there were cases where sufficient initial battery characteristics cannot be obtained. Further, since the increase in resistance associated with increase in temperature was small (PTC magnification was small), there were cases where sufficient safety cannot be obtained.

The present invention has been made by taking the afore-mentioned circumstances into consideration. An object of the present invention is to provide a current collector which can achieve both of the improvement in battery characteristics by reducing the initial (at ambient temperature) interface resistance and the improvement in safety by the PTC function, when the current collector is used for the electrode structure of electrical storage devices such as non-aqueous electrolyte batteries, electrical double layer capacitors, and lithium ion capacitors; electrode structures; electrical storage devices; and composition for current collectors.

### SOLUTION TO PROBLEM

The present inventors have conducted earnest investigation to solve the afore-mentioned problem, and have found out that the high porosity of the PTC layer inhibiting the formation of the conductive pathway was the cause for the high initial (at ambient temperature) interface resistance. In addition, the present inventors have found out that the cause for the small increase in resistance associated with increase in temperature was the use of the polyolefin-based resin for the PTC layer which dissolves in the organic solvent, making it difficult to cut off the conductive pathway during temperature increase. Accordingly, the present inventors have found out that these problems can be solved by using the PTC layer having the following features, thereby accomplishing the present invention.

That is, according to the present invention, a current collector comprising a conductive substrate and a resin layer provided onto at least one side of the conductive substrate, is provided. Here, the resin layer is obtained by a paste including polyolefin-based emulsion particles and a conductive material. Here, the coating weight of the paste is 0.1 to 20 g/m². In addition, the porosity of the resin layer is 10% (v/v) or lower.

According to such current collector, since the polyolefin-based emulsion particles are used and the porosity is kept at 10% (v/v) or lower, improvement in battery characteristics and improvement in safety can both be achieved when the current collector is used for the electrode structure of electrical storage devices such as non-aqueous electrolyte batteries, electrical double layer capacitors electrical double layer capacitors, and lithium ion capacitors lithium ion capacitors. Here, the battery characteristics are improved by decreasing the initial (at ambient temperature) interface resistance, and the safety is improved by the PTC function.

Further, according to the present invention, an electrode structure comprising the afore-mentioned current collector, and an active material layer or an electrode material layer formed on the resin layer of the current collector, is provided.

According to such electrode structure, since the afore-mentioned current collector is used, improvement in battery characteristics and improvement in safety can both be achieved when the electrode structure is used for electrical storage devices such as non-aqueous electrolyte batteries, electrical double layer capacitors, and lithium ion capacitors. Here, the battery characteristics are improved by decreasing the initial (at ambient temperature) interface resistance, and the safety is improved by the PTC function.

In addition, according to the present invention, an electrical storage device comprising the afore-mentioned electrode structure, is provided.

Since the afore-mentioned electrode structure is used, improvement in battery characteristics and improvement in safety can both be achieved when such electrical storage device is used. Here, the battery characteristics are improved by decreasing the initial (at ambient temperature) interface resistance, and the safety is improved by the PTC function.

### EFFECT OF THE INVENTION

According to the present invention, improvement in battery characteristics and improvement in safety can both be achieved. Here, the battery characteristics are improved by decreasing the initial (at ambient temperature) interface resistance, and the safety is improved by the PTC function.

### BRIEF DESCRIPTION OF THE DRAWINGS

[FIG. 1] FIG. 1 is a cross sectional view showing the structure of the current collector according to one embodiment of the present invention.
[FIG. 2] FIG. 2 is a cross sectional view showing the structure of the electrode structure according to one embodiment of the present invention.
[FIG. 3] FIG. 3 is a schematic diagram showing the structure of the polyolefin-based emulsion particles used in one embodiment of the present invention.
[FIG. 4] FIG. 4 is a schematic diagram showing the internal condition of the resin layer, when the resin layer of the electrode structure according to one embodiment of the present invention is placed at normal temperature.
[FIG. 5] FIG. 5 is a schematic diagram showing the internal condition of the resin layer, when the resin layer of the electrode structure according to one embodiment of the present invention is placed at elevated temperature.
[FIG. 6] FIG. 6 is a schematic diagram showing the internal condition of the resin layer having high porosity, when the resin of the electrode structure is placed at normal temperature.
[FIG. 7] FIG. 7 is a schematic diagram showing the internal condition of the resin layer using polyolefin-based resin which dissolves in an organic solvent, when the resin of the electrode structure is placed at normal temperature.
[FIG. 8] FIG. 8 is a schematic diagram showing the internal condition of the resin layer using polyolefin-based resin which dissolves in an organic solvent, when the resin of the electrode structure is placed at elevated temperature.

### DESCRIPTION OF EMBODIMENTS

Hereinafter, the embodiments of the present invention will be described with reference to the figures. Here, in all of the figures, similar constructing elements are provided with similar symbols, and explanation thereof is omitted where applicable.

### <Entire Structure>

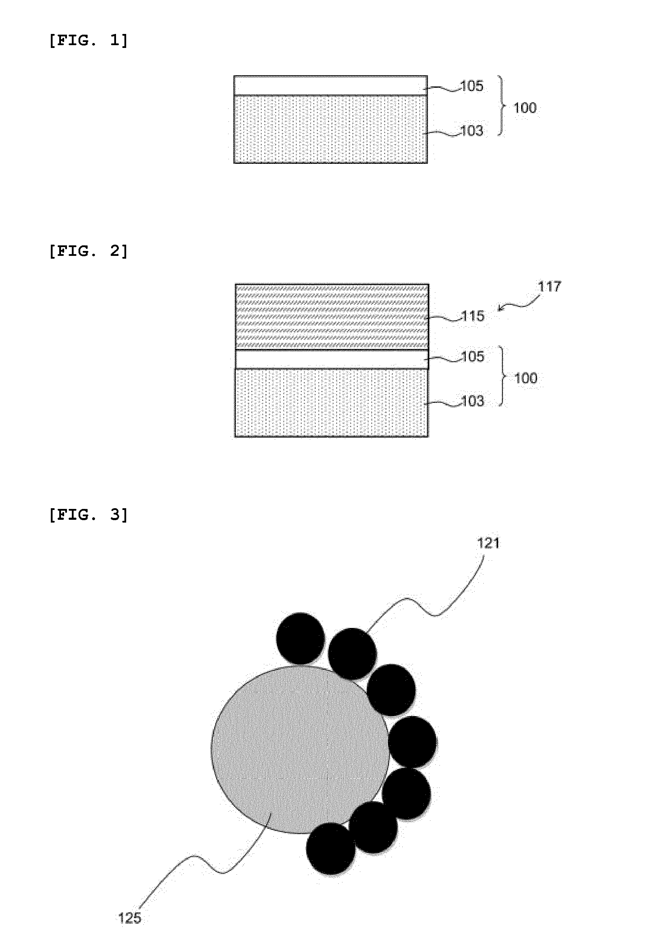

FIG. 1 is a cross sectional view showing the structure of the current collector of the present embodiment. As shown in FIG. 1, the current collector 100 of the present embodiment is provided with a resin layer 105 having conductivity on at least one side of a conductive substrate 103.

FIG. 2 is a cross sectional view showing the structure of the electrode structure structured by using the current collector of the present embodiment. As shown in FIG. 2, an active material layer or an electrode material layer 115 is formed onto the resin layer 105 of the current collector 100 of the present embodiment. Accordingly, an electrode structure 117 suitable for the non-aqueous electrolyte batteries such as lithium ion batteries, electrical double layer capacitors, or lithium ion capacitors can be prepared.

### <Mechanism of Maintaining PTC Function>

FIG. 3 is a schematic diagram showing the structure of the polyolefin-based emulsion particles used in one embodiment of the present invention. The polyolefin-based emulsion particles 125 used in the present embodiment are water-borne emulsion particles. Here, conductive material 121 such as carbon powder is adhered onto the surface of the polyolefin-based emulsion particles 125.

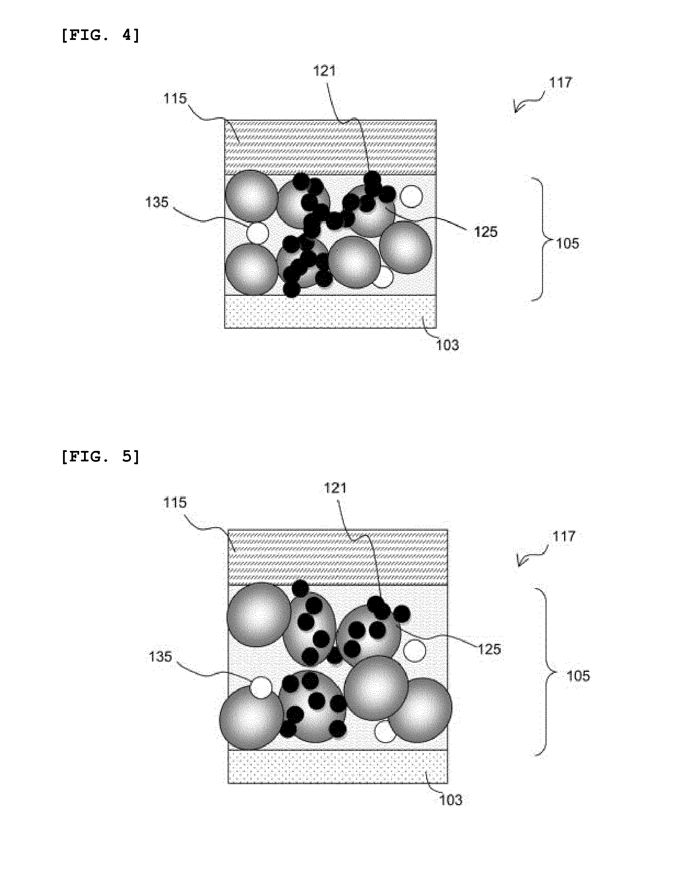

FIG. 4 is a schematic diagram showing the internal condition of the resin layer, when the resin layer of the electrode structure according to one embodiment of the present invention is placed at normal temperature. The resin layer 105 of the current collector 100 of the present embodiment includes the polyolefin-based emulsion particles 125, and conductive material 121. The conductive material 121 is distributed at the surface of or in the gap of the polyolefin-based emulsion particles 125 so as to contact with each other during normal usage, thereby forming a conductive pathway penetrating the resin layer 105. That is, the polyolefin-based emulsion particles 125 as shown in FIG. 3 are distributed so as to overlap with each other, thereby allowing the conductive material 121 to form a network on the surface of or in the gap of the polyolefin-based emulsion particles 125 sufficiently (with minimum amount of the conductive material 121) and realizing conductivity. Here, conductive material 121 exists in the surroundings of the polyolefin-based emulsion particles 125, and the conductive material 121 would not get inside the polyolefin-based emulsion particles 125. In addition, although the resin layer 105 contains bubbles 135, the porosity is 10% (v/v) or lower, and thus hardly disrupts the conductive pathway formed by the conductive material 121. That is, the interface resistance can be sufficiently reduced by using the polyolefin-based emulsion particles 125 and forming the resin layer 105 so that the porosity is 10% (v/v) or lower.

FIG. 5 is a schematic diagram showing the internal condition of the resin layer, when the resin layer of the electrode structure according to one embodiment of the present invention is placed at elevated temperature. The resin layer 105 of the present embodiment realizes the PTC function when an accident occurs. The PTC function can be provided by increasing the resistance, which is accomplished by expanding the space (decrease the density of conductive fine particles in the resin layer 105) between the conductive materials 121 in the resin layer 105. Here, such expansion is obtained as a result of the volume of the resin layer 105 being increased by the expansion of the polyolefin-based emulsion particles 125. That is, the polyolefin-based emulsion particles 125 starts to expand by thermal expansion, thereby cutting the network of the conductive materials 121 at the surface of the polyolefin-based emulsion particles 125 to increase the resistance. Here, as shown in FIG. 4, the conductive material 121 at normal temperature sufficiently (with minimum amount of the conductive material 121) forms the conductive pathway. Therefore, the conductive pathway is easily cut off by the expansion of the polyolefin-based emulsion particles 125 during temperature increase. From such reasons, the present embodiment can achieve sufficient battery characteristics and PTC function with comparatively small amount of the conductive material, with respect to the case where the organic solvent soluble olefin-based resin is used.

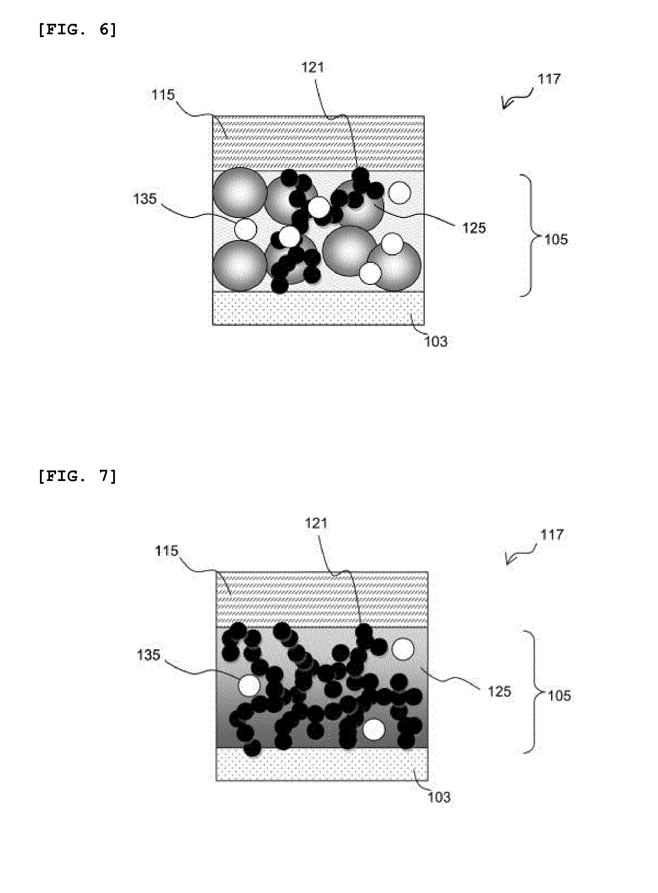

On the other hand, FIG. 6 is a schematic diagram showing the internal condition of the resin layer having high porosity, when the resin of the electrode structure is placed at normal temperature. Regarding the resin layer 105, the porosity exceeds 10% (v/v), and thus the bubble 135 disrupts the conductive pathway formed by the conductive material 121. That is, although the polyolefin-based emulsion particles 125 are used, the interface resistance cannot be sufficiently reduced when the porosity exceeds 10%.

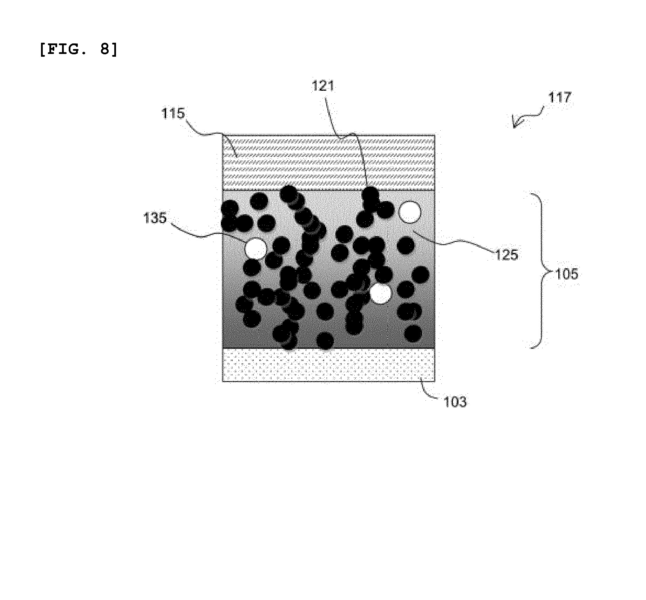

Further, FIG. 7 is a schematic diagram showing the internal condition of the resin layer using polyolefin-based resin which dissolves in an organic solvent, when the resin of the electrode structure is placed at normal temperature. In addition, FIG. 8 is a schematic diagram showing the internal condition of the resin layer using polyolefin-based resin which dissolves in an organic solvent, when the resin of the electrode structure is placed at elevated temperature. Regarding the resin layer 105, although the resistance increases when the PTC function is realized, there are cases where such increase in the resistance is not sufficient. This is since the conductive material 121 is distributed uniformly in the polyolefin-based resin 129 which can be dissolved in an organic solvent. As such, the conductive pathway cannot be formed sufficiently (with minimum amount of the conductive material 121). That is, a large amount of the conductive material 121 is required to maintain the conductivity at normal temperature, and thus the conductive pathway still remain when the polyolefin-based resin expands at elevated temperature. Accordingly, there are cases where the increase in the resistance is not sufficient.

### <Explanation of Each Constitution>

### (1. Conductive Substrate)

The current collector 100 of the present embodiment is obtained by coating the composition for current collector on at least one side of the conductive substrate 103. As the conductive substrate 103, the ones known as various metal foils for non-aqueous electrolyte batteries, electrical double layer capacitors, and lithium ion capacitors can be used in general. Specifically, various metal foils for the positive electrodes and negative electrodes can be used, such as aluminum foil, aluminum alloy foil, copper foil, stainless steel foil, nickel foil and the like. Among these, aluminum foil, aluminum alloy foil, and copper foil are preferable in terms of the balance between the conductivity and cost. There is no particular limitation regarding the thickness of the conductive substrate 103. Here, the thickness is preferably 5µm or more and 50µm or less. When the thickness is less than 5µm, the strength of the foil would not be sufficient, and thus there are cases where the formation or the resin layer becomes difficult. On the other hand, when the thickness exceeds 50µm, the other constitutional components, especially the active material layer or the electrode layer need be made thin. Accordingly, in a case where the current collector is used for the electrical storage device of non-aqueous electrolyte batteries, electrical double layer capacitors, lithium ion capacitors and the like, the thickness of the active material layer need be made thin, resulting in insufficient capacity. Here, the thickness of the conductive substrate can be in the range of two values selected from the group consisting of 5, 10, 15, 20, 25, 30, 35, 40, 45, and 50µm.

### (2. Polyolefin-based Emulsion Particles)

FIG. 3 is a schematic diagram showing the structure of the polyolefin-based emulsion particles used in the present embodiment. In the present embodiment, polyolefin-based emulsion particles 125 containing the polyolefin-based resin 129 as the main component are preferably used, although not limited to these. That is, the polyolefin resin structuring the polyolefin-based emulsion particles 125 are preferably modified with carboxylic acid so as to have a carboxyl group, in order to further decrease the interface resistance by improving the adhesion property with the conductive substrate 103. Here, both end terminals (of the molecular chain) of the polyolefin-based resin 129 is modified with carboxylic acid (or carboxylic acid anhydride) having one or more carboxyl group. That is, the resin component used for the resin layer 105 of the present embodiment includes the polyolefin-based emulsion particles 125, and may consist of only the polyolefin-based emulsion particles 125 or may contain other resin component.

The main component of the polyolefin-based emulsion particles 125 used in the present embodiment is a polypropylene resin, a polyethylene resin, a polypropylene-polyethylene copolymer resin, or a mixture of these resins. Here, both end terminals of these resins are preferably modified with carboxylic acid (or carboxylic acid anhydride) having one or more carboxyl group. A maleic acid-modified polypropylene resin, a maleic acid-modified polyethylene resin, a maleic acid-modified polyethylene-polypropylene block polymer resin, a maleic acid-modified polyethylene-polypropylene graft polymer resin, and a mixture of a maleic acid-modified polypropylene resin and a maleic acid-modified polyethylene resin are especially preferable.

When both end terminals are not modified with carboxylic acid (or carboxylic acid anhydride) having one ore more carboxyl group, the adhesion property with the conductive substrate 103 would be insufficient, and thus can result in cases where the interface resistance at normal temperature becomes high. In addition, when a polyolefin-based resin other than the polyolefin-based emulsion particles 125, that is, a polyolefin-based resin which can be dissolved (in an organic solvent) is used, a large amount of the conductive material 121 is required to maintain the conductivity at normal temperature, and thus the connection in the conductive material 121 becomes difficult to cut off when the PTC is realized. This would result in unfavorable cases where the resistance is difficult to increase.

Here, the polyolefin-based emulsion particles 125 used in the present embodiment has a core-shell structure, comprising a core particle containing the polyolefin-based resin 129 as the main component and a shell layer containing the conductive material 121. Therefore, sufficient conductivity can be obtained at normal temperature even when the ratio of the conductive material 121 against the polyolefin-based resin 129 is lowered considerably. That is, such core-shell structure would result in relative high ratio of the polyolefin-based resin 129 against conductive material 121. Accordingly, it is effective in terms of realizing high insulating property when the PTC function is realized.

There is no particular limitation regarding the carboxylic acid (or carboxylic acid anhydride) for modifying the polyolefin-based resin 129 used in the present embodiment. Here, it is preferable to use maleic acid, pyromellitic acid, citric acid, tartaric acid, oxalic acid, mellitic acid, terephthalic acid, adipic acid, fumaric acid, itaconic acid, trimellitic acid, and isophthalic acid for example. It is especially preferable to modify the resin using the maleic acid in terms of adhering property with metal. Here, any of these acids can be an acid anhydride.

### (3. Conductive Material)

Since the insulating property would be high when the resin layer 105 of the present embodiment contains only the polyolefin-based emulsion particles 125, conductive material 121 need be formulated in order to provide electron conductivity. As the conductive material 121 used in the present embodiment, known carbon powders and metal powders can be used for example. Among these, carbon powders are preferable. As the carbon powder, acetylene black, Ketjen black, furnace black, carbon nanotubes, carbon fibers, various graphite particles and the like can be used, and mixtures thereof can also be used.

There is no particular limitation regarding the formulation amount of the conductive material 121. Here, in order to achieve the desired PTC function with high safety, it is preferable that the PTC function can be achieved and safety can be maintained with smaller amount, when compared with the binder resin for normal carbon coatings or active material layer. Specifically, the formulation amount of the conductive material 121 with respect to 100 parts by mass of the polyolefin-based emulsion particles 125 is preferably 10 to 70 parts by mass, more preferably 10 to 45 parts by mass, and further more preferably 10 to 40 parts by mass. When the formulation amount is less than 10 parts by mass, the volume resistivity of the resin layer 105 becomes high, resulting in cases where the conductivity necessary as the current collector 100 cannot be obtained. On the contrary, when the formulation amount exceeds 70 parts by mass, the connection of the conductive material 121 cannot be disconnected even when the volume of the resin layer expands, thereby resulting in cases where sufficient resistance cannot be obtained. The conductive material 121 can be dispersed in the resin solution by using a planetary mixer, a ball mill, a homogenizer, and the like. Here, the formulation amount of the conductive material 121 can be in the range of two values selected from the group consisting of 10, 15, 20, 25, 30, 35, 40, 45, 50, 60 and 70 parts by mass.

### (4. Antifoaming Agent)

There is no particular limitation regarding the antifoaming agent used in the present embodiment. Here, it is preferable to use hydrocarbons. In the present embodiment, surfactant is frequently formulated in the resin composition (paste) for forming the resin layer 105, in order to disperse the polyolefin-based emulsion particles 125 in water or in aqueous solution. Therefore, the resin composition easily forms bubbles by the effect of the surfactant, thereby leaving bubbles in the resin layer 105. In order to remove these bubbles, addition of the antifoaming agent is effective, and addition of hydrocarbons is especially effective. Bubbles can be reduced without the addition of the antifoaming agent, by altering the dispersing conditions or the agitating condition, however, such alteration can affect the PTC function and the like of the resin layer 105. Therefore, addition of the antifoaming agent is more preferable.

### (4-1. Hydrocarbon)

There is no particular limitation regarding the hydrocarbon (or a composition containing hydrocarbons) used in preferably the present embodiment. Here, the hydrocarbon is liquid at normal temperature, and contains a paraffin component (number of carbon atoms being 6 to 20) by 50 mass% or more. As the hydrocarbon (or a composition containing hydrocarbons) satisfying such conditions, liquid paraffin, kerosene, light oil, spindle oil, machine oil and the like are preferably used. It is preferable to use these hydrocarbons (or a composition containing hydrocarbons), since increase in the initial resistance becomes small and PTC magnification becomes large regarding the resin layer.

### (4-2. Other Antifoaming Agent)

As the other antifoaming agent used in the present embodiment, polyoxyalkylene glycol; fatty acid esters such as polyoxyalkylene glycol fatty acid esters obtained by esterification of polyoxyalkylene alkyl ether with higher fatty acid, and polyoxyalkylene alkyl ether fatty acid esters; silicone-based compounds represented by silicone oil; ester-based compounds such as polyoxyalkylene sorbitan ester; ether-based compounds such as polyoxyalkylene propyl ether; organopolysiloxane resin; polypropylene glycol; and the like can be mentioned for example. Here, these agents can be added with fine particles such as silica particles. The hydrocarbons and the other antifoaming agents can be mixed.

### (4-3. Formulation Amount)

There is no particular limitation regarding the formulation amount of the antifoaming agent. Here, it is preferable that the antifoaming agent is formulated by 0.0001 to 10 parts by mass with respect to 100 parts by mass of the resin component of the polyolefin-based emulsion particles 125. When the formulation amount is 0.0001 parts by mass or less, the antifoaming effect would be weak, and the foaming effect becomes too high. Accordingly, formation of the conductive pathway will be inhibited by the bubbles. This is unfavorable since the initial (at ambient temperature) interface resistance would be high and sufficient initial battery characteristics cannot be obtained. On the other hand, when the formulation amount exceeds 10 parts by mass, the antifoaming agent itself would inhibit the formation of the conductive pathway. This is unfavorable since the initial (at ambient temperature) interface resistance would be high and sufficient initial battery characteristics cannot be obtained. Here, the formulation amount of the antifoaming agent can be in the range of two values selected from the group consisting of 0.0001, 0.0005, 0.001, 0.005, 0.01, 0.05, 0.1, 0.5, 1, 5, and 10 parts by mass.

### (5. Resin Layer)

FIG. 1 is a cross sectional view showing the structure of the current collector according to the present embodiment. The current collector 100 of the present embodiment comprises the resin layer 105 which uses the afore-mentioned composition for current collector. When the resin layer 105 is used as the positive electrode, it is preferable that the resin layer 105 has a PTC function and is provided on the conductive substrate 103. Here, it is preferable that the resin layer 105 is provided as a separate constitution especially from the active material layer 115, thereby achieving high PTC (shut down function) and the high rate characteristics of the battery, while enabling efficient achievement of the PTC function. That is, the adhesion property between the conductive substrate 103 and the active material layer 115 can be improved, the shut down function and excellent high speed charge/discharge characteristics can both be achieved, and the current collector can be suitably used for non-aqueous electrolyte batteries and electrical storage devices with excellent safety.

There is no particular limitation regarding the method for forming the resin layer 105 having conductivity used in the present embodiment. Here, it is preferable to first prepare a composition for current collector (paste) by mixing the polyolefin-based emulsion particles 125, conductive material 121, and an antifoaming agent in water or aqueous solution; followed by coating the composition for current collector (paste) onto the conductive substrate 103. As the method for coating, a roll coater, a gravure coater, and a slit die coater can be used for example.

With respect to the current collector 100 of the present embodiment, the coating amount (coating weight) of the composition for current collector (paste) being coated to form the resin layer 105 is preferably 0.1 to 20 g/m². When the coating amount is 0.1 g/m² or less, the coating would have unevenness, resulting in cases where the PTC function is not realized. On the other hand, when the coating amount exceeds 20 g/m², the volume of the active material of the battery would decrease, resulting in cases where the battery characteristics deteriorate. Here, the coating amount can be in the range of two values selected from the group consisting of 0.1, 0.25, 0.5, 1, 2.5, 5, 10, 15, and 20 g/m².

After the composition for current collector (paste) is coated onto the conductive substrate 103, the composition is baked to dry the composition for current collector (paste), thereby forming the resin layer 105. There is no particular limitation regarding the baking temperature. Here, the baking temperature is preferably 80 to 200°C for example. When the baking temperature is below 80°C, the curing would be insufficient, and thus can be problematic when the adhesion property with the conductive substrate is insufficient. On the other hand, when the baking temperature exceeds 200°C, the resin would fuse depending on the type of the polyolefin-based resin used, and thus can be problematic when the emulsion particles are not formed. Here, the baking temperature can be in the range of two values selected from the group consisting of 80, 90, 100, 110, 120, 130, 140, 150, 160, 170, 180, 190, and 200°C.

In addition, there is no particular limitation regarding the baking period. Here, the baking period is preferably 10 to 200 seconds for example. When the baking period is shorter than 10 seconds, the curing would be insufficient, and thus can be problematic when the adhesion property with the conductive substrate is insufficient. On the other hand, when the baking period exceeds 200 seconds, the resin would fuse depending on the type of the polyolefin-based resin used, and thus can be problematic when the emulsion particles are not formed. Here, the baking period can be in the range of two values selected from the group consisting of 10, 20, 30, 40, 50, 60, 70, 80, 90, 100, 120, 140, 160, 180, and 200 seconds.

In addition, it is preferable to measure the porosity of the resin layer 105 obtained by drying the composition for current collector (paste) in order to adjust the porosity to 10% (v/v) or lower. When the porosity exceeds 10% (v/v), the degree of cross-linking would be low, and thus the resin would fuse at a temperature above the PTC realizing temperature, and the conductive material would aggregate due to the re-aggregation of the fused resin, resulting in cases where the resistance decreases (conductivity emerges) again. That is, even when the polyolefin-based emulsion particles 125 are used, the interface resistance cannot be sufficiently reduced if the porosity of the resin layer 105 exceeds 10% (v/v). Accordingly, it is important to adjust the porosity of the resin layer 105 within a desired range by adding an antifoaming agent or the like. Here, the porosity can be in the range of two values selected from the group consisting of 0, 1, 2, 3, 4, 5, 6, 7, 8, 9, and 10% (v/v).

### (6. Electrode Structure)

FIG. 2 is a cross sectional view showing the structure of the electrode structure formed by using the current collector of the present embodiment. The electrode structure 117 of the present embodiment can be obtained by forming an active material layer 115 or an electrode material layer 115 on the resin layer 105 of the current collector 100 of the present embodiment. With the electrode structure 117 for the electrical storage device having the electrode material layer 115 formed thereon, a separator, and a non-aqueous electrolyte solution, a non-aqueous electrolyte battery such as a lithium ion secondary battery (including parts for batteries) can be manufactured. Regarding the electrode structure 117 for the non-aqueous electrolyte battery and the non-aqueous electrolyte battery, known parts for the non-aqueous electrolyte batteries can be used for the parts other than the current collector 100.

Here, the active material layer 115 formed as the electrode structure 117 of the present embodiment can be the one suggested for the non-aqueous electrolyte batteries. For example, regarding the positive electrode, LiCoO₂, LiMnO₄, LiNiO₂ and the like as the active material and carbon black such as acetylene black and the like as the conductive material are dispersed in PVDF or a water dispersion type PTFE as a binder to give a paste. The paste is then coated on the current collector 100 of the present embodiment and dried to obtain the positive electrode structure of the present embodiment.

Regarding an electrode structure 117 of a negative electrode, black lead, graphite, mesocarbon microbead and the like as the active material is dispersed in CMC (carboxymethyl cellulose) as a thickening agent, followed by mixing with SBR (styrene butadiene rubber) as a binder to give a paste. The paste is then coated as the active material forming material onto the current collector 100 of the present embodiment using copper as the substrate 103, and then the paste is dried to obtain the negative electrode structure of the present embodiment.

### (7. Electrical Storage Device)

### Electrical Storage Device (Electrical Double Layer Capacitor, Lithium Ion Capacitors and the like)

In general, electrical double layer capacitors and the like are safe compared with the secondary batteries. Here, in view of improving the high rate characteristics, the current collector 100 of the present embodiment can be applied for the electrical double layer capacitors and the like. The current collector 100 of the present embodiment can be applied to electrical storage devices of electrical double layer capacitors, lithium ion capacitors and the like, which require high speed charge/discharge at a high current density. The electrode structure 117 for the electrical storage device according to the present embodiment can be obtained by forming an electrode material layer 115 on the current collector 100 of the present embodiment. Here, the electrode structure 117 can be used together with a separator, an electrolyte solution and the like to manufacture the electrical storage device of the electrical double layer capacitors, lithium ion capacitors and the like. In the electrode structure 117 and the electrical storage device of the present embodiment, known parts for the electrical double layer capacitors and lithium ion capacitors can be used for the parts other than the current collector 100.

The electrode material layer 115 can be structured with a positive electrode, a negative electrode, an electrode material, a conductive material, and a binder. In the present embodiment, the afore-mentioned electrode material layer 115 is formed on the resin layer 105 of the current collector 100 of the present embodiment to give the electrode structure 117, before obtaining the electrical storage device. Here, as the electrode material, the ones conventionally used as the electrode material for the electrical double layer capacitors and for the lithium ion capacitors can be used. For example, carbon powders such as activated charcoal and black lead, and carbon fibers can be used. As the binder, PVDF (polyvinylidene difluoride), SBR, water dispersion type PTFE and the like can be used for example. Here, the electrical storage device of the present embodiment can be used to structure the electrical double layer capacitors and the lithium ion capacitors by fixing a separator in between the electrode structures 117 of the present embodiment, and then immersing the separator in an electrolyte solution. As the separator, a membrane made of polyolefin having microporous, a non-woven fabric for an electrical double layer capacitor, and the like can be used for example.

As the afore-mentioned non-aqueous electrolyte, there is no particular limitation so long as there is no side reaction such as decomposition in the voltage range used as the electrical double layer capacitors or lithium ion capacitors. For example, quarternary ammonium salts such as tetraethylammonium salt, triethylmethylammonium salt, tetrabutylammonium salt and the like can be used as the positive ion; and hexafluorophosphate, tetrafluoroborate, perchlorate and the like can be used as the negative ion.

As the afore-mentioned non-aqueous solvent, aprotic solvents such as carbonates, esters, ethers, nitriles, sulfonic acids, lactones and the like can be used. For example, one type or two or more types of non-aqueous solvents selected from ethylene carbonate (EC), propylene carbonate (PC), diethyl carbonate (DEC), dimethyl carbonate (DMC), ethylmethyl carbonate (EMC), 1,2-dimethoxyethane, 1,2-diethoxyethane, tetrahydrofuran, 2-methyltetrahydrofuran, dioxane, 1,3-dioxolane, diethylene glycol dimethyl ether, ethylene glycol dimethyl ether, acetonitrile, propionitrile, nitromethane, N,N-dimethylformamide, dimethylsulfoxide, sulforane, γ-butyrolactone and the like can be used.

The embodiments of the present invention have been described with reference to the Drawings. Here, they are merely an exemplification of the present invention, and the present invention can adopt various constituents other than those mentioned above.

For example, in the present embodiment, a surfactant can be formulated in the resin composition (paste) for forming the resin layer 105, in order to disperse the polyolefin-based emulsion particles 125 stably in water or in aqueous solution. Here, there is no particular limitation regarding the surfactant. For example, a nonionic surfactant and an ionic surfactant are preferable. As the nonionic surfactant, an ester-type surfactant such as glycerin-fatty acid ester and an ether-type surfactant such as polyoxyethylene alkyl phenyl ether can be used for example. Among the ionic surfactants, monoalkyl sulfate and alkylbenzene sulfonic acid salt can be used as the anionic surfactant, and dialkyl dimethyl ammonium salt and alkyl benzyl dimethyl ammonium salt can be used as the cationic surfactant. These surfactants can be used alone or can be used by combining two or more types of these surfactants. In addition, the formulation amount of the surfactant is preferably 5 to 30 parts by mass with respect to 100 parts by mass of the resin component of the polyolefin-based emulsion particles 125.

In addition, in the present embodiment, a cross-linker can be formulated in the resin composition (paste) for forming the resin layer 105, when the polyolefin-based resin structuring the polyolefin-based emulsion particles 125 is modified with carboxylic acid and the like. Here, there is no particular limitation regarding the cross-linker. For example, an epoxy-based cross-liner, a melamine-based cross-linker, an isocyanate-based cross-linker, a polyoxyalkylene-based cross-linker, and a carbodiimide-based cross-linker are preferable. In addition, the formulation amount of the cross-linker is preferably 0.1 to 50 parts by mass with respect to 100 parts by mass of the resin component of the polyolefin-based emulsion particles 125.

### EXAMPLES

Hereinafter, the present invention will be described in detail with reference to Examples. However, the present invention shall not be limited to these Examples.

### <Examples 1 to 13, Comparative Examples 1 to 6>

The starting materials by the composition as shown in Table 1 were added in a ball mill, followed by dispersion for 8 hours to give a coating (resin composition for current collector). (Here, in Table 1, "PP" refers to polypropylene, and "PE" refers to polyethylene. In addition, the addition amount of the conductive material and the antifoaming agent are provided by the amount added with respect to 100 parts by mass of the base resin.) The coating was coated on one side of an aluminum foil (JIS A1085) having a thickness of 15µm using a bar coater so that the coating amount would be as shown in Table 2. Subsequently, the coating was subjected to baking for 24 seconds with a peak metal temperature (PMT) of 100°C. Accordingly, a current collector was prepared. Hereinafter, the substrate, coating, and the conditions of drying were the same, and thus their descriptions are omitted.

[Table 1]

**Table 1**

| | | base resin | | conductive material | | antifoaming agent | |
|---|---|---|---|---|---|---|---|
| | | resin | type | type | addition amount (parts by mass) | type | addition amount (parts by mass) |
| | 1 | maleic acid-modified PP | water borne emulsion | acetylene black | 20 | liquid paraffin(main component C11H24) | 0.0001 |
| | 2 | maleic acid-modified PP | water borne emulsion | acetylene black | 20 | liquid paraffin(main component C11H24) | 10 |
| | 3 | maleic acid-modified PP | water borne emulsion | acetylene black | 20 | liquid paraffin(main component C11H24) | 0.1 |
| | 4 | maleic acid-modified PP | water borne emulsion | acetylene black | 20 | liquid paraffin(main component C11H24) | 0.1 |
| | 5 | maleic acid-modified PP | water borne emulsion | acetylene black | 20 | polyoxyalkylene ether fatty acid ester | 0.1 |
| | 6 | maleic acid-modified PP | water borne emulsion | acetylene black | 20 | kerosene | 0.1 |
| Example | 7 | maleic acid-modified PP | water borne emulsion | acetylene black | 20 | light oil | 0.1 |
| | 8 | maleic acid-modified PP | water borne emulsion | acetylene black | 40 | liquid paraffin(main component C11H24) | 0.1 |
| | 9 | maleic acid-modified PP | water borne emulsion | acetylene black | 60 | liquid paraffin(main component C11H24) | 0.1 |
| | 10 | maleic acid-modified PE | water borne emulsion | acetylene black | 20 | liquid paraffin(main component C12H26) | 0.1 |
| | 11 | ethylene glycidyl ether copolymer | water borne emulsion | acetylene black | 20 | liquid paraffin(main component C12H26) | 0.1 |
| | 12 | PE | water borne emulsion | acetylene black | 20 | liquid paraffin(main component C12H26) | 0.1 |
| | 13 | PP | water borne emulsion | acetylene black | 20 | liquid paraffin(main component C12H26) | 0.1 |
| Comparative Example | 1 | maleic acid-modified PP | water borne emulsion | acetylene black | 20 | liquid paraffin (main component C11H24) | 0.00001 |
| | 2 | maleic acid-modified PP | water borne emulsion | acetylene black | 20 | liquid paraffin (main component C11H24) | 0.1 |
| | 3 | maleic acid-modified PP | water borne emulsion | acetylene black | 20 | liquid paraffin(main component C11H24) | 0.1 |
| | 4 | maleic acid-modified PP | water borne emulsion | acetylene black | 20 | polyoxyalkylene ether fatty acid ester | 0.00005 |
| | 5 | maleic acid-modified PP | solvent borne solution | acetylene black | 20 | liquid paraffin(main component C11H24) | 0.1 |
| | 6 | acryl-based resin | water borne emulsion | acetylene black | 20 | liquid paraffin (main component C11H24) | 0.1 |

[Table 2]

**Table 2**

| | | coating amount (g/m²) | porosity (%) | initial resistance (Ω) | PTC magnification | discharge rate characteristics |
|---|---|---|---|---|---|---|
| Example | 1 | 5 | 10 | C | C | C |
| | 2 | 5 | 1 | B | B | B |
| | 3 | 0.1 | 3 | B | C | B |
| | 4 | 20 | 3 | C | B | C |
| | 5 | 5 | 3 | C | C | C |
| | 6 | 5 | 3 | B | B | B |
| | 7 | 5 | 3 | B | B | B |
| | 8 | 5 | 3 | A | A | A |
| | 9 | 5 | 3 | A | C | A |
| | 10 | 5 | 3 | B | B | B |
| | 11 | 5 | 3 | C | B | C |
| | 12 | 5 | 3 | C | B | C |
| | 13 | 5 | 3 | C | B | C |
| Comparative Example | 1 | 5 | 13 | D | C | D |
| | 2 | 0.05 | 3 | C | D | C |
| | 3 | 22 | 3 | D | B | D |
| | 4 | 5 | 16 | D | C | D |
| | 5 | 5 | 3 | C | D | C |
| | 6 | 5 | 3 | C | E | C |

### <Evaluation Method>

### (1) Coating Amount (Layer Thickness)

The coated foil was cut in 100mm square, and its mass was measured. After removing the coating, the mass was measured again. The coating amount (layer thickness) was calculated from the balance between the masses. The measurement results are shown in Table 2.

### (2) Porosity

Porosity was measured by observing the cross section of the coated foil. The cross section was made by using ion milling, ultramicrotome and the like, and the cross section was observed by magnification of 1 to 10x10⁴ using FE-SEM (field emission-type scanning electron microscope). Then, porosity was calculated as a ratio of area of pores to the area of the entire resin (not including conductive substrate). The measurement results are shown in Table 2.

### (3) PTC Function Measuring Method

The current collectors thus obtained were cut out in a shape having a rectangular portion of 4cm x 5cm and an extended portion (a terminal portion) having a 5mm width from one end of the longitudinal side of the rectangular portion. The resin layer was removed from the terminal portion to expose the surface of the current collector, thereby preparing the test piece. Two test pieces were cut out from each of the positive electrode samples, and were allowed to come in contact with each other facially so that the measurement region would overlap (overlapping area being 20 cm²) and one of the terminal portions would be arranged at one end side of the longitudinal side of the measurement region and the other terminal portion would be arranged at the other end side of the longitudinal side of the measurement region. The contacting two test pieces and the non-aqueous electrolyte solution were inserted in between two laminate films and were sealed. Here, the terminal portions were placed outside the laminate films. As the non-aqueous electrolyte solution, the ones prepared by formulating LiPF₆ by a concentration of 1.0M in a solvent mixture of EC and DEC (volume ratio of 1:1) were used.

The terminal portions were connected to alternating current, and the sealed measurement region was held with a light force (pressure of approximately 25 N/cm²) in between two plate jigs and was placed in a thermostat chamber. Change in the resistance was observed while an alternating current of 1 kHz was applied and heat with a programming rate of 5°C/min was applied. The resistance at 25°C was taken as the initial resistance. The temperature was raised to 160°C, and the highest resistance was taken as the maximum resistance. PTC magnification was obtained from the equation of "PTC magnification = maximum resistance/initial resistance.

### (Evaluation Criteria of Initial Resistance)

A: lower than 1Ω
B: 1Ω or higher and lower than 5Ω
C: 5Ω or higher and lower than 10Ω
D: 10Ω or higher

When the initial resistance was lower than 10Ω, the resulting battery can be operated without any problems.

### (Evaluation Criteria of PTC Magnification)

A: 50 times or more
B: 30 times or more and less than 50 times
C: 10 times or more and less than 30 times
D: 5 times or more and less than 10 times
E: less than 5 times

When the magnification was 10 times or more, the resulting battery can realize sufficient safety, which is achieved by suppressing the current by increasing the resistance when the temperature increases during overcharging.

### (4) Battery Evaluation Method

As described below, adhesion property between the active material layer and the resin layer was evaluated using the positive electrode material obtained by forming the active material layer using the active material paste. Further, discharge rate characteristics and battery lifetime was evaluated using the lithium ion battery structured with the positive electrode material. The results are shown in Table 2.

### (Manufacturing Method of Lithium Ion Battery)

LiMn₂O₄ powder as the active material (24 parts by mass), water dispersion-type PTFE as the binder resin (0.28 parts by mass as solids), acetylene black as the conductive material (2.5 parts by mass), and water (33 parts by mass) were added in a deaerating agitator, and the mixture was agitated for 15 minutes to give a positive electrode active material paste. The positive electrode active material paste was coated onto each of the current collectors so that the thickness of the coated paste would be 70µm, thereby obtaining the positive electrode material.

Further, artificial graphite (100 parts by mass) was dispersed in 2% CMC (carboxy methyl cellulose) aqueous solution (25 parts by mass, solids being 0.5 parts by mass), followed by addition of aqueous dispersion of SBR (styrene butadiene rubber) as a binder (40 parts by mass by solids), there by obtaining the mixture as a paste. Subsequently, the paste was coated onto a copper foil having a thickness of 20µm so that the thickness of the coated paste would be 70µm, thereby obtaining the negative electrode material. A microporous separator made of polypropylene was sandwiched in between the positive electrode material and the negative electrode material, and then placed in a battery case, thereby obtaining a coin battery. As the electrolyte solution, a solution mixture of EC (ethylene carbonate) and EMC (ethyl methyl carbonate) added with 1M LiPF₆ was used.

### (Method for Evaluating Discharge Rate Characteristics)

Discharge capacity of these lithium ion batteries (Value relative to that at 0.2C) was observed for the discharge current rate of 5C, when the upper voltage limit of charged state was 4.2 V, charging current was 0.2C, discharge final voltage was 2.8 V, and the temperature was 25°C. (Here, 1C is the value of the current (A) when the current capacity (Ah) of the battery is taken out in 1 hour (h).

### (Evaluation Criteria)

When the capacity retention rate is 0.70 or more at 5C, the battery characteristics would be sufficient.
A: 0.80 or more
B: 0.75 or more and less than 0.80
C: 0.70 or more and less than 0.75
D: less than 0.70

### <Discussion of Results>

Results as shown in Tables 1 and 2 were obtained. Examples 1 to 13: Porosity was in the desired range, thereby improving the initial resistance and PTC magnification. Accordingly, the discharge rate characteristics are also excellent.
Comparative Example 1: Porosity was too high, and thus the initial resistance was high and the discharge rate characteristics were not good.
Comparative Example 2: The layer thickness was too thin, and thus the PTC magnification was not sufficient.
Comparative Example 3: The layer thickness was too thick, and thus the initial resistance was high and the discharge rate characteristics were not good.
Comparative Example 4: Porosity was too high, and thus the initial resistance was high and the discharge rate characteristics were not good.
Comparative Example 5: Polyolefin-based resin which dissolves in an organic solvent was used, and thus the PTC magnification was not sufficient.
Comparative Example 6: Acryl-based resin instead of polyolefin-based resin was used, and thus PTC function was not realized.

The present invention has been explained with reference to Examples. These Examples are provided merely as an exemplification, and it should be understood by the person having ordinary skill in the art that various modification can be made, and such modified examples are in the scope of the present invention.

### EXPLANATION OF SYMBOLS

100: current collector
103: conductive substrate
105: resin layer (resin layer for current collector)
115: active material layer of electrode material layer
117: electrode structure
121: conductive material
125: polyolefin-based emulsion particle
129: polyolefin-based resin
135: bubble

## Claims

1. A current collector, comprising:
a conductive substrate; and
a resin layer provided on at least one side of the conductive substrate; wherein
the resin layer is formed with a paste comprising:
polyolefin-based emulsion particles; and
a conductive material;
the paste has a coating weight of 0.1 to 20 g/m²; and
the resin layer has a porosity of 10% (v/v) or less.

2. The current collector of Claim 1, wherein the resin layer further comprises 0.0001 to 10 parts by mass of an antifoaming agent with respect to 100 parts by mass of the polyolefin-based emulsion particles.

3. The current collector of Claim 2, wherein the antifoaming agent contains a hydrocarbon.

4. The current collector of any one of Claims 1 to 3, wherein the conductive material is contained by 10 to 50 parts by mass with respect to 100 parts by mass of the polyolefin-based emulsion particles.

5. The current collector of any one of Claims 1 to 4, wherein the polyolefin-based emulsion particles comprises one or more type of resin selected from the group consisting of a polypropylene resin, a polyethylene resin, and a polypropylene-polyethylene copolymer resin, wherein both end terminals of the resins are modified with carboxylic acid or carboxylic acid anhydride.

6. The current collector of any one of Claims 1 to 5, wherein the conductive material comprises carbon powders or metal powders.

7. The current collector of any one of Claims 1 to 6, wherein the conductive substrate is a metal selected from the group consisting of aluminum, aluminum alloy, and copper.

8. An electrode structure, comprising:
the current collector of any one of Claims 1 to 7; and
an active material layer or an electrode material layer formed on the resin layer of the current collector.

9. An electrical storage device, comprising the electrode structure of Claim 8.

10. The electrical storage device of Claim 9, wherein the electrical storage device is one or more type of the electrical storage device selected from the group consisting of a non-aqueous electrolyte battery, an electrical double layer capacitor, and a lithium ion capacitor.
